# EUROPÄISCHE PATENTSCHRIFT

(11) **EP 3 638 497 B1**
(45) Veröffentlichungstag und Bekanntmachung des Hinweises auf die Patenterteilung: **09.03.2022**
(21) Anmeldenummer: 18729020.0
(22) Anmeldetag: 11.05.2018
(51) Int. Cl.: B29D 30/32

(54) **VERFAHREN UND VORRICHTUNG ZUR HERSTELLUNG VON REIFEN**
METHOD AND APPARATUS FOR MANUFACTURING TIRES
PROCÉDÉ ET DISPOSITIF DE FABRICATION DE PNEUMATIQUES

(30) Priorität: 16.06.2017 DE 102017005818
(43) Veröffentlichungstag der Anmeldung: 22.04.2020
(73) Patentinhaber: Harburg-Freudenberger Maschinenbau GmbH, 21079 Hamburg (DE)
(72) Erfinder: WACHTER, Markus, 22926 Ahrensburg (DE); BEHRENS, Achim, 21271 Asendorf (DE); LANGE-KRAUEL, Thomas, 21037 Hamburg (DE)
(74) Vertreter: Klickow & Wetzel PartGmbB
(86) Internationale Anmeldenummer: PCT/DE2018/000143
(87) Internationale Veröffentlichungsnummer: WO 2018/228623

(56) Entgegenhaltungen:
- DE-A1- 2 555 111
- DE-A1-102011 050 142

## Beschreibung

Die Erfindung betrifft ein Verfahren und eine Vorrichtung zur Herstellung von Reifen. Die Vorrichtung beinhaltet eine Reifenaufbautrommel mit Lagenumschlag zur Herstellung von unvulkanisierten Reifenrohlingen.

Bei der Herstellung von unvulkanisierten Reifenrohlingen werden typischerweise Luftbälge zur Bereitstellung der erforderlichen Andruckkräfte beim Lagenumschlag verwendet. Derartige Trommeln sind relativ teuer und machen in vorgegebenen zyklischen Abständen eine Auswechslung der Luftbälge erforderlich. Bekannt ist es aus der EP-A 1 001 876 auch bereits, mechanische Wulstumschlagvorrichtungen zur realisieren, bei denen der erforderliche Andruck unter Verwendung einer Vielzahl von einzelnen Hebeln bzw. Umschlagfingern erreicht wird, die ähnlich zu den Streben eines Regenschirmes angeordnet sind. Diese mechanischen Vorrichtungen weisen gegenüber einer Verwendung von Luftbälgen eine erhöhte Standzeit auf, ermöglichen jedoch keine symmetrischen Fahrbewegungen.

Aus der DE 10 2011 050 142 A1 ist bereits eine Vorrichtung zur Herstellung von Reifen bekannt, die mit einer Reifenaufbautrommel versehen ist. Zur Realisierung eines Lagenumschlages von Materiallagen bei der Herstellung von unvulkanisierten Reifen werden Umschlagfinger verwendet. Die Umschlagfinger sind mit einer Antriebseinheit gekoppelt.

Eine ähnliche Vorrichtung zur Herstellung von Reifen wird auch in der DE 25 55 111 A1 beschrieben.

Eine erste Aufgabe der vorliegenden Erfindung ist es, ein Verfahren und eine Vorrichtung der einleitend genannten Art derart zu definieren bzw. zu konstruieren, dass die Durchführung von symmetrischen Verfahrbewegungen unterstützt wird.

Diese Aufgabe wird erfindungsgemäß dadurch gelöst, dass der Lagenumschlag eine Mehrzahl von Rollenarmen bzw. Umschlagfingern aufweist, die mit einem Antrieb gekoppelt sind, der außerhalb der Reifenaufbautrommel angeordnet ist. Der Antrieb wird in einer vorteilhaften Ausführungsform der erfindungsgemäßen Vorrichtung in einem feststehenden Reifenaufbauring gelagert und besteht bevorzugt aus drei Spindeln, die vorteilhaft separat, gegensinnig und synchron angetriebenen werden. Als Regelung wird bevorzugt eine Momenten-Regelung genutzt. Für die Verstellung der Spindeln werden bevorzugt Servomotoren verwendet. Hierfür werden wiederrum bevorzugt Wechselstrom bzw. Drehstromantriebe genutzt.

Weiterhin bevorzugt sind die drei Spindeln in einer Umfangsrichtung im Wesentlichen mit gleichen Abständen relativ zueinander angeordnet.

Die Kraftübertragung von den Antriebsspindeln auf die entsprechende, in die Reifenaufbautrommel integrierte Mechanik erfolgt in einer vorteilhaften Ausführungsform über radial verfahrbare Mitnehmer.

Durch die Anordnung des Antriebes außerhalb der Reifenaufbautrommel ist es möglich, die Umschlagfinger über einen sogenannten Pusher zu betätigen, der absolut symmetrische Verfahrbewegungen vorgibt. Es können hierdurch Reifenrohlinge mit einer sehr hohen gleichmäßigen Qualität produziert werden.

Eine weitere Aufgabe der Erfindung ist es, die Materialandruckkraft im Umschlagprozess effizienter nutzbar zu machen.

Diese Aufgabe wird erfindungsgemäß durch einen Kernsetzabstand im Umschlagsprozess erreicht, der größer oder gleich dem kleinsten Kern zu Kern Abstand im weiteren Reifenaufbauprozess ist. Dadurch wird der Reifenrohling im Umschlagprozess bei gleichbleibender Umschlaglänge flacher im Vergleich zum Stand der Technik und es ergibt sich dadurch eine vorteilhafte Kraft-Winkel-Kombination.

Eine weitere Aufgabe der Erfindung ist es, eine Vorrichtung zur Herstellung von Reifen so zu konstruieren, dass sowohl Reifenrohlinge in Flachaufbau- als auch in Kronenaufbauverfahren gefertigt werden können.

Diese Aufgabe wird erfindungsgemäß dadurch gelöst, dass in der Karkassmaschine eine zweite Antriebseinheit vorhanden ist. Zusätzlich weist die erfindungsgemäße Vorrichtung eine wechselbare Reifenaufbautrommel auf, die jeweils mindestens einen Aufbauverfahren unterstützt.

Eine erfindungsgemäße Vorrichtung zur Herstellung von Reifen weist in einer vorteilhaften Ausführungsform eine Reifenaufbautrommel und eine Karkassmaschine auf. Darüber hinaus weist eine erfindungsgemäße Vorrichtung zur Herstellung von Reifen in einer bevorzugten Variante einen Lagenserver, mit dem die verschiedenen Materiallagen des Reifenrohlings auf die Reifenaufbautrommel aufbringbar sind, einen Laufstreifenserver, mit dem das Gürtelpaket bzw. das Material des Laufstreifens auf eine Gürteltrommel aufbringbar ist, und einen Reifenaufbauring auf, in dessen Bereich ein Reifenrohling aus den auf die Reifenaufbautrommel aufgebrachten Materiallagen der Karkasse in Verbindung mit dem Gürtelpaket herstellbar ist.

In den Zeichnungen sind Ausführungsbeispiele der Erfindung schematisch dargestellt.

Es zeigen:
- Fig. 1: einen schematischen Längsschnitt durch eine Reifenaufbautrommel mit mechanischem Lagenumschlag,
- Fig. 2: einen Längsschnitt durch eine erfindungsgemäße Reifenaufbautrommel mit mechanischem Lagenumschlag ohne aufgelegtes Material,
- Fig. 3: einen Längsschnitt durch die in Fig. 2 gezeigte Reifenaufbautrommel mit aufgelegtem Innerliner Material,
- Fig. 4: einen Längsschnitt durch die in Fig. 3 gezeigte Reifenaufbautrommel mit zusätzlich aufgelegtem Seitenwand-Material,
- Fig. 5: einen Längsschnitt durch die in Fig. 4 gezeigte Reifenaufbautrommel mit zusätzlich aufgelegtem Body Ply Material,
- Fig. 6: eine Darstellung des Transfers von Reifenaufbautrommel von Laufstreifernserver zum Reifenaufbauring in einer erfindungsgemäßen Vorrichtung zur Herstellung von Reifen,
- Fig. 7: einen Längsschnitt durch die in Fig. 5 gezeigte Reifenaufbautrommel positioniert im Reifenaufbauring,
- Fig. 8: einen Längsschnitt durch die in Fig. 7 gezeigte Reifenaufbautrommel mit zusätzlich gesetzten Kernen,
- Fig. 9: einen Längsschnitt durch die in Fig. 8 gezeigte Reifenaufbautrommel mit ausgefahrener Innenschulter und belüfteter Karkasse,
- Fig. 10: einen Längsschnitt durch die in Fig. 9 gezeigte Reifenaufbautrommel mit in den Ringnuten der Schieberinge positionierten Mitnehmern,
- Fig. 11: einen Längsschnitt durch die in Fig. 10 gezeigte Reifenaufbautrommel mit zum Lagenumschlag verfahrenen Umschlagfingern,
- Fig. 12: einen Längsschnitt durch die in Fig. 11 gezeigte Reifenaufbautrommel nach dem Umschlagvorgang und mit freigegebener Ringnut,
- Fig. 13: einen Längsschnitt durch die in Fig. 12 gezeigte Reifenaufbautrommel mit zusätzlich mit der Karkasse verbundenem Gürtelpaket,
- Fig. 14: einen Längsschnitt durch die in Fig. 13 gezeigte Reifenaufbautrommel mit aktiver Anrollvorrichtung für den Laufstreifen,
- Fig. 15: einen Längsschnitt durch die in Fig. 14 gezeigte Reifenaufbautrommel mit eingefahrener Kernklemmung und Innenschulter,
- Fig. 16: eine schematische Darstellung der Kernsetzabstände und den resultierenden Andruckkräften.

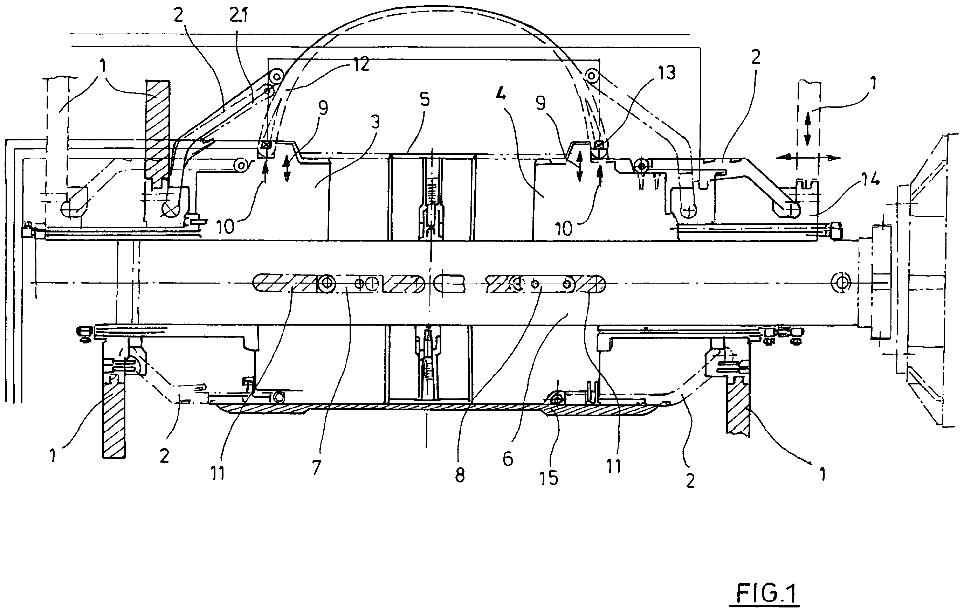

Die in Figur 1 dargestellte Reifenaufbautrommel besteht aus je einer linken (3) und rechten Trommelhälfte (4), die wiederum auf einer Trommelwelle (6) gelagert sind. Die beiden Trommelhälften (3, 4) bilden in Verbindung mit einem Trommel-Mittenteil (5) und einer integrierten Kernspannvorrichtung (10) einen zylindrischen Rundkörper. Auf diesem Rundkörper werden die einzelnen Karkassenlagen (12, 15) verarbeitet und zu einem Reifenrohling geformt.

Mechanische Wulststützen (9), die radial ausfahren, stabilisieren den Wulstbereich nach innen, in Verbindung mit der Kernspannvorrichtung (10). Beide Trommelhälften (3, 4) sind auf der geschlitzten Trommelwelle (6) verriegelt. Die Axialverstellung bei den Trommelhälften (3, 4) wird mit einem Motor erzeugt, der eine in der Kakassmaschine oder in der Trommelwelle (6) positionierte Spindel dreht.

Ein typischer Funktionsablauf wird nachfolgend beschrieben. Auf den zylindrischen Trommelkörper (3, 4, 5) mit eingefahrenen Umschlagfingern (2), Kernspannvorrichtung (10) und mechanischen Wulststützen (9) werden die Aufbaumaterialien zur Herstellung einer Karkasse aufgebracht. Danach werden mit einer segmentierten, ringförmigen Kernsetzvorrichtung (1) zwei Kerne (13) auf den Trommelkörper (3, 4, 5) (links/rechts) gesetzt. Die Kernsetzvorrichtung (1) besteht aus einem symmetrischen linken und rechten Hälfte.

Die Kernsetzvorrichtung (1) ist wiederum auf mindestens einer links/rechts gängigen Spindel gelagert, die über Servomotoren präzise und programmgesteuert, axial verfahrbar ist. Nach dem Setzen der Kerne (13) fahren die linke und rechte Kernsetzvorrichtung (1) nach außen. Die als Schiebevorrichtungen eingesetzten Kernsetzvorrichtungen (1) verfahren nun radial nach innen in die Schieberinge (16) der Trommelhälften (3, 4). Dadurch ist die servogesteuerte Verbindung zwischen der Kernsetzvorrichtung (1) und den Umschlagfingern (2) hergestellt.

Der Abstand der Kerne (13) wird durch die Drehung der mindestens einen Spindel reduziert. Zuvor wurde die Wulststütze (9) radial ausgefahren und bildet eine stabile Anlage für den folgenden Lagenumschlag-Prozess. Eine Vielzahl von Umschlagfingern (2), die sehr eng auf der linken- und rechten Trommelhälfte (3, 4) angeordnet sind, heben das auf ihnen liegende Karkassenmaterial an.

Mit zunehmender Reduzierung der Abstände der Kerne (13) und gleichzeitiger Einspeisung von Druckluft in die sich aufwölbende Karkasse (12) werden die Umschlagfinger (2), über die Axialbewegung nach außen gelenkt. Die Rollen der linken und rechten Umschlagfinger (2) verrollen, absolut symmetrisch, das Karkassenmaterial (15) an die sich bildende Karkasse (12) (Reifenrohling). Die nach außen gelenkten Umschlagfinger (2) bilden im Rollenkopfbereich sich vergrößernde Abstände, die wiederum durch eine Doppelrollenmechanik (2.1) ausgefüllt werden.

Hierdurch wird eine flächige Anrollung beim Lagenumschlag erreicht und somit erfolgt eine Vermeidung von Lufteinschlüssen. Nach Vollendung des Lagenumschlages werden von externer Seite weitere Rohlingskomponenten zugeführt.

Die Reifenaufbautrommel ist mit einer externen, bei Bedarf angekuppelten, servogesteuerten Kernsetzvorrichtung (1) versehen. Hierdurch wird ein absoluter Synchronlauf der Rollensysteme beider Trommelhälften (3, 4) gewährleistet. Gleichzeitig gibt es durch den motorischen Synchronlauf keinerlei "stip-slic-Effekte" oder schwierige/instabile Einregelungen einer pneumatischen Umschlagfingerbetätigung. Folglich ist für den Anwender eine deutlich verbesserte Rundlaufqualität/Uniformity zu erwarten. Insbesondere hinsichtlich besserer Konizität und Seitenkraftschwankungen.

Die erfindungsgemäße Reifenaufbautrommel hat im modularen Aufbau weitere Vorteile aufzuweisen. Der Bereich der mithilfe einer Kernklemmvorrichtung (10) realisierten Kernklemmung und der Wulststütze (9) kann baugleich zu einem zwei Balg-Trommel Typ realisiert werden. Eine absolut sichere Kernklemmung in Verbindung mit einer radial ausfahrbaren mechanischen Wulststütze (9) ist hierdurch gegeben.

Die Reifenaufbautrommel hat trotz des Einsatzes von Umschlagfingern (2) mit allen ihren Zwischenräumen, eine absolutdurchgehende axiale Auflagefläche zur Bildung einer automatischen Spleißnaht.

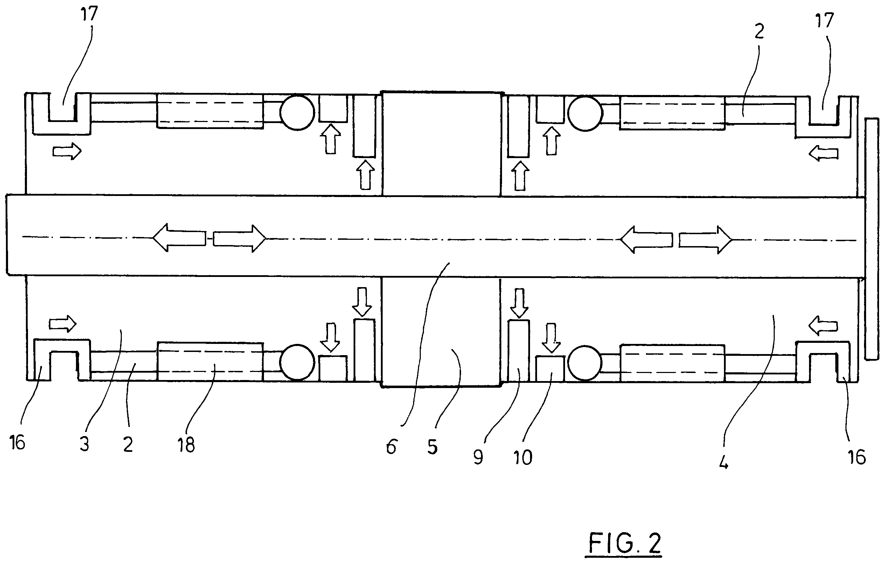

In Figur 2 wird eine weitere erfindungsgemäße Reifenaufbautrommel mit Schieberingen (16) gezeigt, die eine jeweils eine Ringnut (17) aufweisen. Die Umschlagfinger (2) liegen innerhalb der Reifenaufbautrommel in Längsnuten und sind mit den Schieberingen (16) drehbeweglich verbunden. Mithilfe einer Zwangsführung (18) werden die Umschlagfinger (2) vorteilhaft geführt. Weiterhin besteht die gezeigte Ausführungsform einer erfindungsgemäßen Reifenaufbautrommel aus zwei Trommelhälften (3, 4), die als Outboard- (3) bzw. Inboard-Trommelhälfte (4) in Abhängigkeit von ihrer Position relativ zum Lager der Trommelwelle (6) definiert werden. Zwischen den Trommelhälften (3, 4) befindet sich das Mittenteil (5), neben dem sich die Kernklemmvorrichtung (10) und die Schulterabstützung (9) befinden.

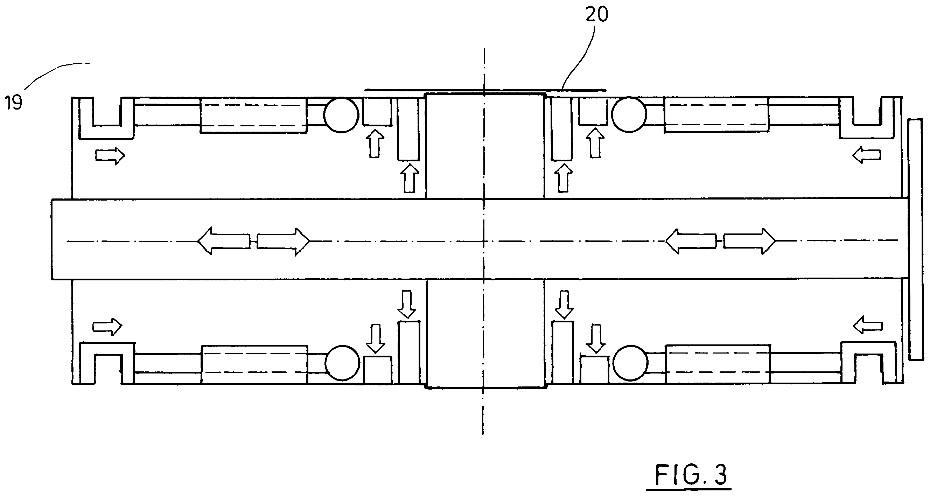

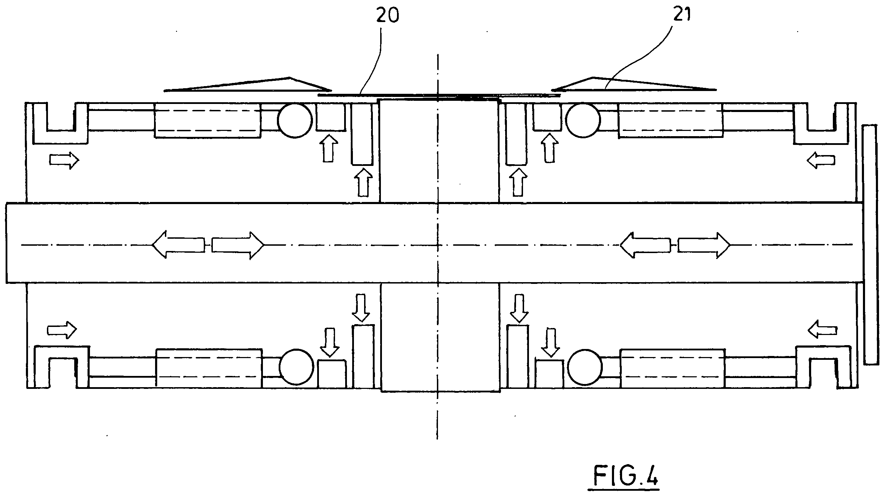

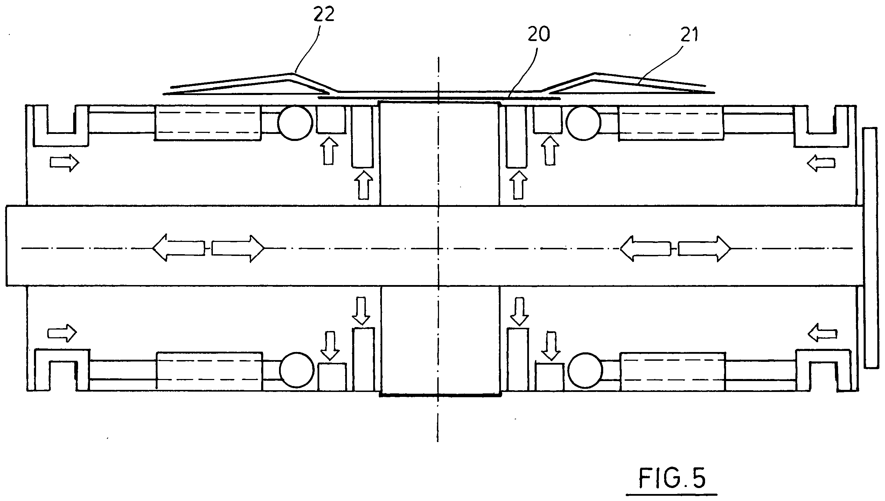

Figur 3 zeigt einen Prozessschritt des erfindungsgemäßen Verfahrens zur Herstellung von Reifen. Während die Reifenaufbautrommel sich mittig innerhalb des Lagenservers (19) der erfindungsgemäßen Vorrichtung befindet, werden nacheinander die verschiedenen Materiallagen aufgebracht. Figur 3 zeigt die Trommel nach Auflegen des Innerliner Materials (20). Anschließend wird das Seitenwand-Material (21) aufgelegt, was in Figur 4 veranschaulicht wird. In Figur 5 wird die Trommel nach Auflegen des Body-Ply Materials (22) gezeigt, das auf die zuvor gelegten Lagen aufgebracht wird.

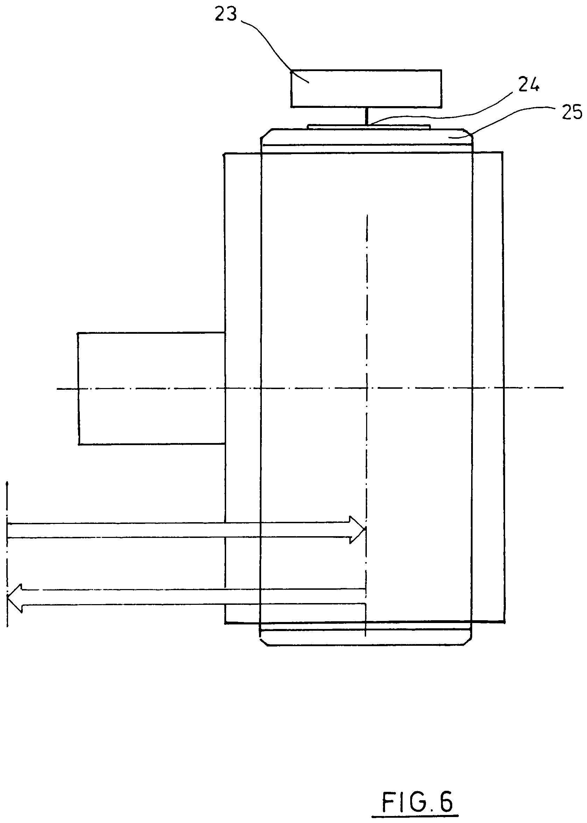

Figur 6 zeigt einen nächsten Schritt des erfindungsgemäßen Verfahrens zur Herstellung von Reifen. Die Gürteltrommel (30), auf die im Bereich des Laufstreifenservers (29) zuvor ein Gürtelpaket (25) aufgebracht wurde, wird vom Laufstreifenserver (29) zum Reifenaufbauring (23) transferiert. Der Reifenaufbauring (23) weist einen Greifer (24) auf, der das Gürtelpaket (25) des Reifenrohlings von der Gürteltrommel (30) aufnimmt und hält. Anschließend wird die Gürteltrommel (30) aus dem Reifenaufbauring (23) wieder zum Laufstreifenserver (29) transferiert. Die Reifenaufbautrommel wird mittig unter dem Gürtelpaket (25) im Reifenaufbauring (23) positioniert.

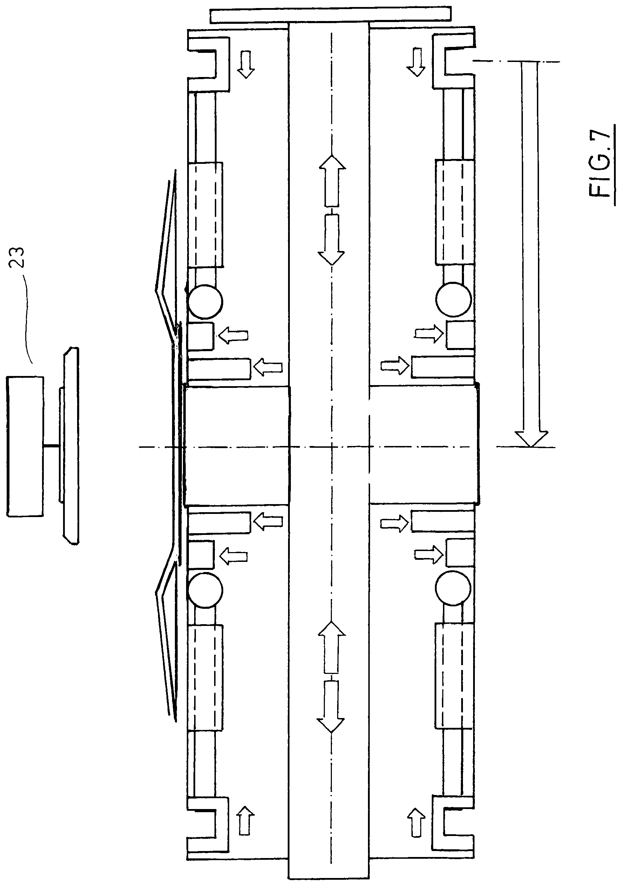

Figur 7 zeigt den Längsschnitt einer erfindungsgemäßen Reifenaufbautrommel, die sich nach dem in Figur 6 gezeigten Prozessschritt innerhalb des Reifenaufbaurings (23) befindet.

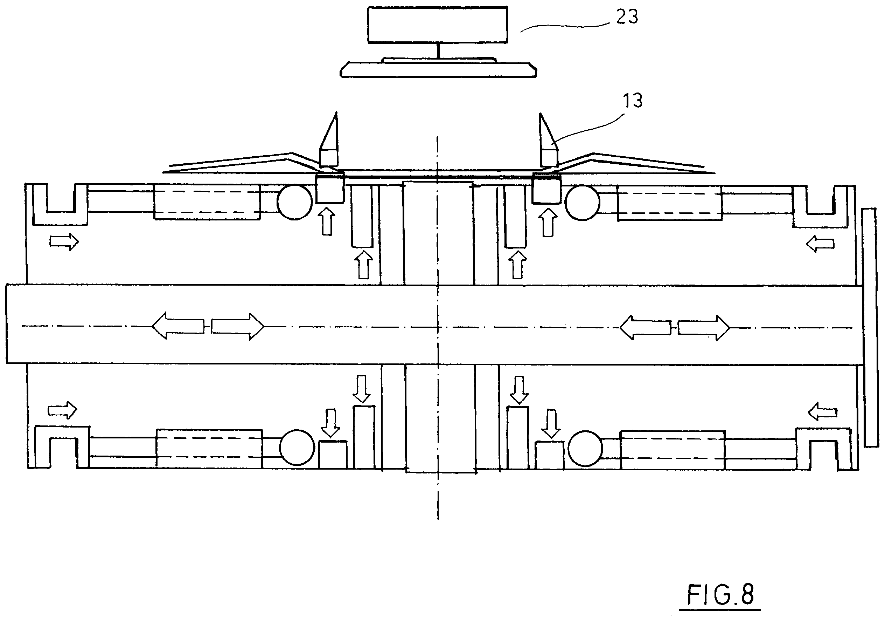

Der folgende in Figur 8 illustrierte Schritt des erfindungsgemäßen Verfahrens ist das Setzen der Kerne (13), die mithilfe eines Verfahrens der Kernklemmvorrichtung (10) radial nach außen fixiert werden.

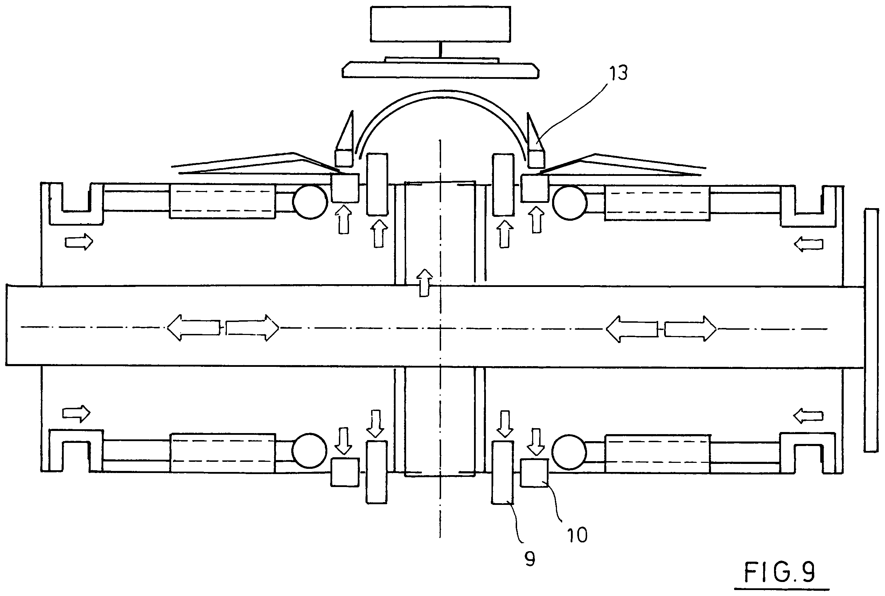

Figur 9 zeigt den nächsten Schritt des Verfahrens, für den die Innenschultern der Wulststütze (9) ausgefahren werden und die Karkasse mittels eines von innerhalb der Reifenaufbautrommel zugeleiteten Überdrucks belüftet wird.

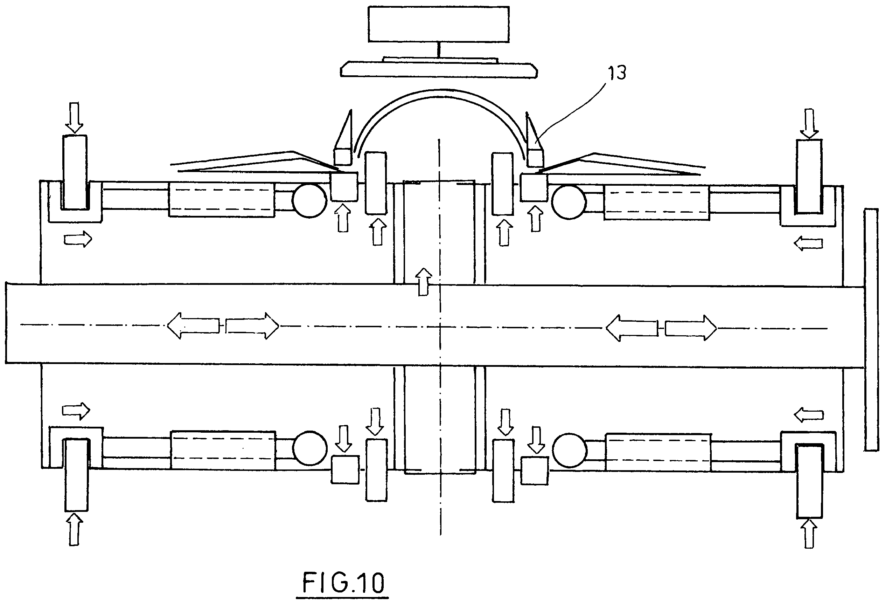

Anschließend werden, wie in Figur 10 gezeigt, die mithilfe der Kernsetzvorrichtung (1) realisierten Mitnehmer (26) in die Ringnute (17) der Schieberinge (16) verfahren, wodurch diese mit dem in den Reifenaufbauring (23) integrierten Antrieb gekoppelt werden.

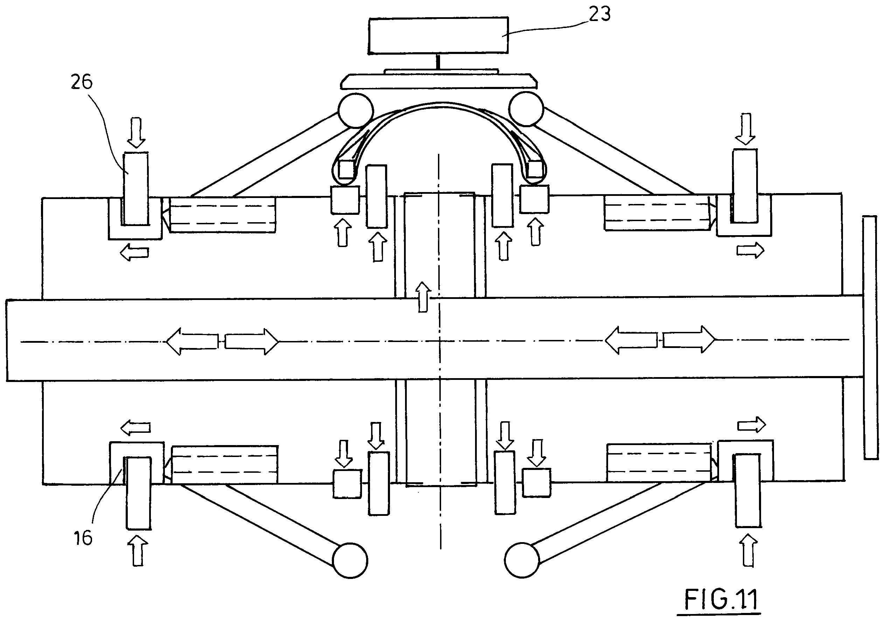

Mithilfe des axialen, synchronen und gegenläufigen Antriebs der Spindeln werden die Mitnehmer (26) und damit auch die Schieberinge (16) in Richtung der Mitte des Reifenaufbaurings (23) verfahren, wodurch die Umschlagfinger (2), wie in Figur 11 gezeigt, ausfahren. Dabei laufen die in Umfangsrichtung vorteilhaft gleichmäßig verteilten Umschlagfinger (2) über Rollen an Ihrer dem Reifenrohling zugewandten Seite zunächst eine nicht dargestellte, schräg angeordnete, ringförmige mechanische Fläche hoch, worauf dann das elastomere Material der zuvor platzierten Lagen aufgerichtet und umgeschlagen wird. In einem weiteren Schritt drücken die Rollen an den Umschlagfingern (2) das Material an die Karkasse an.

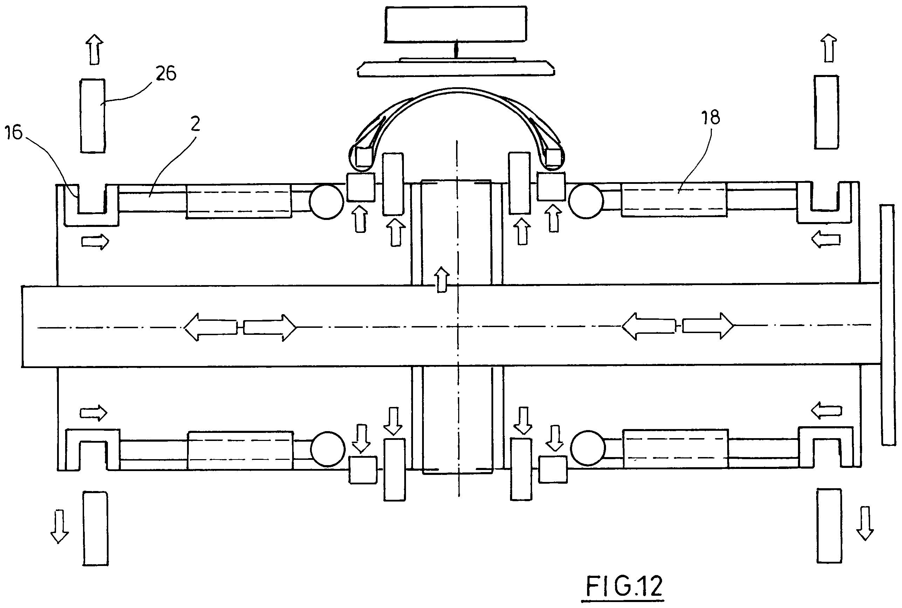

Anschließend werden, wie in Figur 12 dargestellt, die Umschlagfinger (2) durch ein Verfahren der Schieberinge (16) wieder eingeklappt und in den Längsnuten der Reifenaufbautrommel versenkt.

Gemäß dem Stand der Technik verläuft in Umfangsrichtung auf den Umschlagfingern (2) eine Mehrzahl von Spiralfedern, die federnde Rückstellkräfte erzeugen. Erfindungsgemäß wird zusätzlich eine Zwangsrückführung (18) realisiert, so dass die Federn nur relativ geringe Rückstellkräfte aufbringen müssen. Das Problem der Federkräfte besteht darin, dass in Abhängigkeit von der Positionierung und der Länge der Umschlagfinger (2) ein Teil der Federkräfte in einer radialen Richtung nach innen wirkt, eine weitere Kraftkomponente wirkt jedoch über die Rollen der Umschlagfinger (2) auf die Seitenwand des aufzubauenden Reifens ein.

Anschließend werden die Mitnehmer (26) zurückgefahren und geben die Ringnuten (17) der Schieberinge (16) wieder frei.

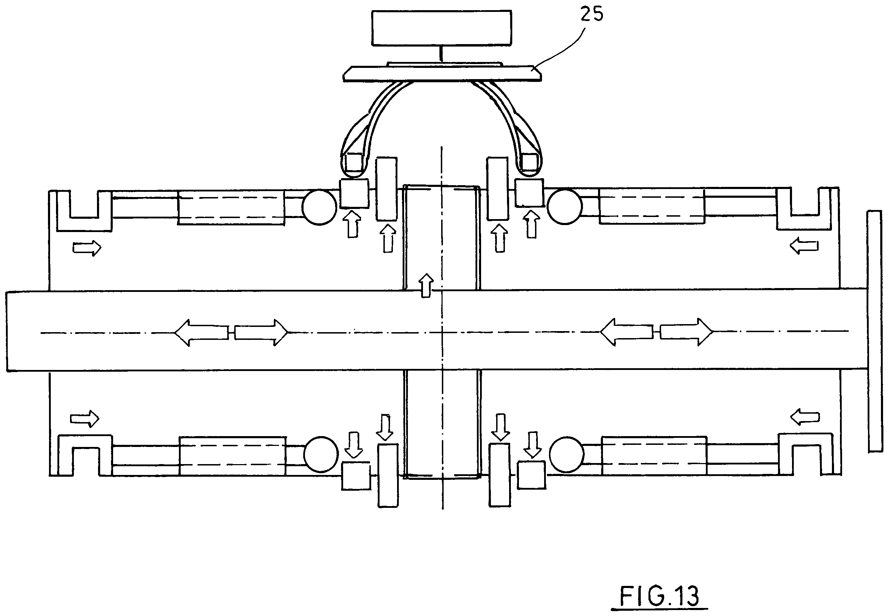

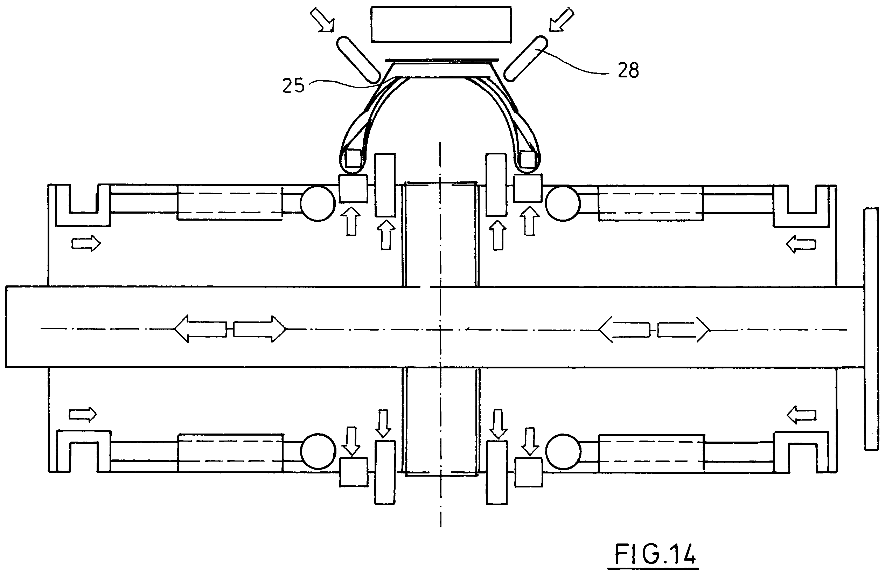

Figur 13 zeigt den nächsten Prozessschritt eines erfindungsgemäßen Verfahrens zur Herstellung von Reifen, bei dem der Kernabstand auf die finale Position eingestellt wird und die Karkasse mit dem Gürtelpaket (25) verbunden wird. Folgend wird das als ein Laufstreifen ausgebildete Gürtelpaket (25) mittels einer im Reifenaufbauring (23) vorhandenen Anrollvorrichtung (28) an die Karkasse angerollt, wie in Figur 14 illustriert.

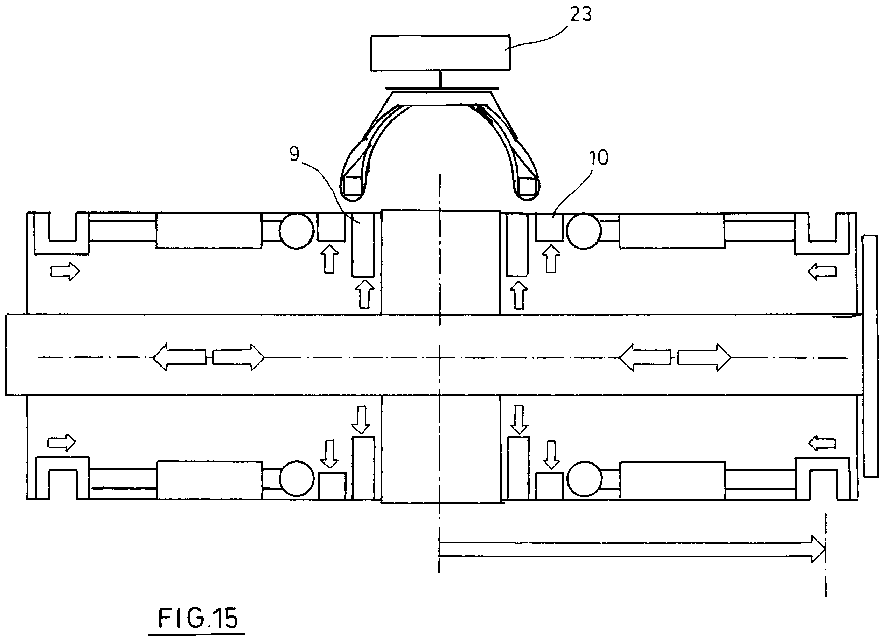

Durch das Einfahren von Kernklemmvorrichtung (10) und Innenschultern der Wulststütze (9) wird der Reifenrohling anschließend von der Reifenaufbautrommel gelöst, wie in Figur 15 veranschaulicht wird.

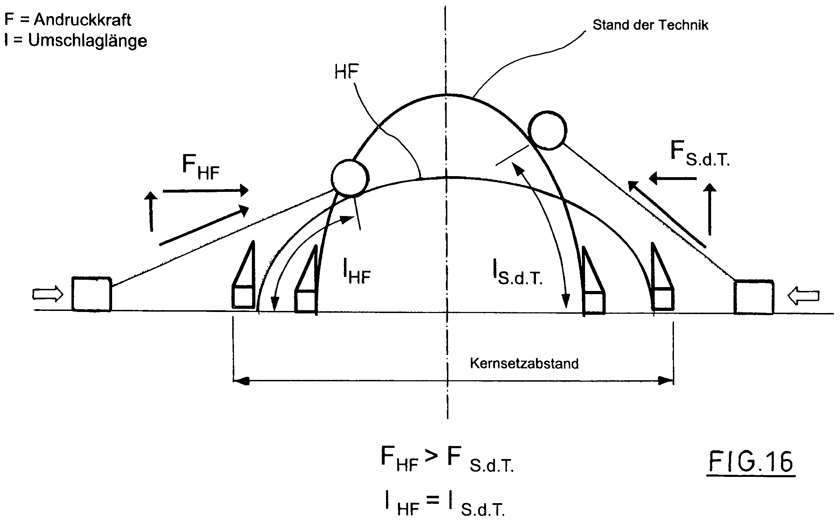

Figur 16 zeigt eine Verdeutlichung der durch die erfindungsgemäße Kernsetzung im Umschlagprozess auftretenden Andruckkraft F. Die Karkasse des Reifenrohlings hat durch den größeren oder mindestens gleichen Abstand der gesetzten Kerne (13), gegenüber dem finalen Kernsetzabstand im Reifenaufbauprozess, eine flachere oder maximal gleich hohe Kontur im Vergleich zum Stand der Technik. Bei gleicher Umschlaglänge I, ist die relevante horizontale Kraftkomponente des Kraftvektors in der erfindungsgemäßen Ausführungsform einer Vorrichtung zur Herstellung von Reifen größer oder mindestens gleich groß im Vergleich zum Stand der Technik.

## Patentansprüche

1. Vorrichtung zur Herstellung von Reifen, aufweisend eine Reifenaufbautrommel mit einer Vorrichtung zur Realisierung eines Lagenumschlages zur Herstellung von unvulkanisierten Reifenrohlingen, bei der der Lagenumschlag durch Mehrzahl von Umschlagfingern (2) realisierbar ist, die mit einer Antriebseinheit gekoppelt sind, die außerhalb der Reifenaufbautrommel angeordnet ist, **dadurch gekennzeichnet, dass** der externe Antrieb der Umschlagfinger (2) durch mehrere separat angetriebene Spindeln realisiert ist, die in einem feststehenden Reifenaufbauring (23) gelagert sind und gegensinnig synchron antreibbar sind.

2. Vorrichtung nach Anspruch 1, **dadurch gekennzeichnet, dass** die Umschlagfinger (2) der Hälften der Reifenaufbautrommel mit einem Schiebering (16) je Trommelhälfte (3, 4) gekoppelt sind.

3. Vorrichtung zur Herstellung von Reifen nach mindestens einem der vorstehenden Ansprüche, **dadurch gekennzeichnet, dass** die Umschlagfinger (2) mit einem Servoantrieb gekoppelt sind.

4. Vorrichtung zur Herstellung von Reifen nach mindestens einem der vorstehenden Ansprüche, **dadurch gekennzeichnet, dass** die Schieberinge (16) jeweils eine Ringnut (17) aufweisen, die zur Ankopplung an den externen Antrieb für die Umschlagfinger (2) dient.

5. Vorrichtung zur Herstellung von Reifen nach Anspruch 1 **dadurch gekennzeichnet, dass** die Antriebseinheit im feststehenden Reifenaufbauring (23) durch radial verfahrbare Mitnehmer (26) an den mindestens einen Schiebering (16) der Reifenaufbautrommel ankoppelbar ist.

6. Vorrichtung zur Herstellung von Reifen nach Anspruch 1, **dadurch gekennzeichnet, dass** eine Karkassmaschine derart ausgeführt ist, dass durch die Verwendung verschiedener Reifenaufbautrommeln sowohl Reifenrohlinge im Flachaufbau als auch Reifenrohlinge im Kronenaufbau gefertigt werden können.

7. Vorrichtung zur Herstellung von Reifen nach Anspruch 6, **dadurch gekennzeichnet, dass** die flexible Fertigung von Reifenrohlingen in Flach- oder Kronenaufbau durch eine zweite Antriebseinheit in der Karkassmaschine realisiert ist.

8. Vorrichtung zur Herstellung von Reifen nach Anspruch 1, **dadurch gekennzeichnet, dass** eine effizienter nutzbare Materialandruckkraft erreicht wird, indem der Kernsetzabstand während des Umschlagprozesses derart vorgebbar ist, dass ein Kernsatzabstand größer oder gleich dem kleinsten Kern zu Kern Maß erreicht wird, das im weiteren Reifenaufbauprozess angefahren wird.

9. Verfahren zur Herstellung von Reifen, wobei das Verfahren umfasst:
Bereitstellen einer Vorrichtung zum Herstellung von Reifen, aufweisend eine Reifenaufbautrommel mit einer Vorrichtung zur Realisierung eines Lagenumschlages zur Herstellung von unvulkanisierten Reifenrohlingen, bei dem ein Umschlagprozess des Reifenmaterials durch Mehrzahl von Umschlagfingern (2) realisierbar ist, die durch einen außerhalb der Reifenaufbautrommel gelagerten Antrieb angetrieben wird, **dadurch gekennzeichnet, dass** der externe Antrieb vor Umschlagfingern (2) durch mehrere separat angetriebene Spindeln realisiert ist, die in einem feststehenden Reifenaufbauring (23) gelagert sind und gegensinnig synchron antreibbar sind.

10. Verfahren nach Anspruch 9 **dadurch gekennzeichnet, dass** durch eine synchrone Ansteuerung der Umschlagmechanik auf beiden Seiten der Reifenaufbautrommel ein besonders gleichmäßiger Umschlag ausgeführt wird.

11. Verfahren nach den Ansprüchen 9 oder 10 **dadurch gekennzeichnet, dass** durch eine Kernsetzung mit einem Kern zu Kern Abstand größer oder gleich dem kleinsten im weiteren Verlauf der Rohreifenfertigung angefahrenen Kernabstands ein vorteilhaftes Kraft-Winkel-Verhältnis entsteht, das eine effektivere Nutzung der Materialandruckkraft ermöglicht.

## Claims

1. Apparatus for manufacturing tyres, having a tyre building drum with a device for realizing a ply turn-up for manufacturing unvulcanized green tyres, in which the ply turn-up can be realized by a plurality of turn-up fingers (2), which are coupled to a drive unit which is arranged outside the tyre building drum, **characterized in that** the external drive of the turn-up fingers (2) is realized by a number of separately driven spindles, which are mounted in a fixed tyre building ring (23) and can be driven synchronously in opposite directions.

2. Apparatus according to Claim 1, **characterized in that** the turn-up fingers (2) of the halves of the tyre building drum are coupled to a sliding ring (16) of each drum half (3, 4).

3. Apparatus for manufacturing tyres according to at least one of the preceding claims, **characterized in that** the turn-up fingers (2) are coupled to a servo drive.

4. Apparatus for manufacturing tyres according to at least one of the preceding claims, **characterized in that** the sliding rings (16) have in each case an annular groove (17), which serves for the coupling to the external drive for the turn-up fingers (2).

5. Apparatus for manufacturing tyres according to Claim 1, **characterized in that** the drive unit in the fixed tyre building ring (23) can be coupled to the at least one sliding ring (16) of the tyre building drum by radially movable carriers (26).

6. Apparatus for manufacturing tyres according to Claim 1, **characterized in that** a carcass machine is configured in such a way that both green tyres of a flat design and green tyres of a crowned design can be produced by using different tyre building drums.

7. Apparatus for manufacturing tyres according to Claim 6, **characterized in that** the flexible production of green tyres of a flat or crowned design is realized by a second drive unit in the carcass machine.

8. Apparatus for manufacturing tyres according to Claim 1, **characterized in that** a more efficiently usable material pressing force is achieved by the core setting spacing being presettable during the turning-up process in such a way that a core setting spacing greater than or equal to the smallest core-to-core dimension is achieved and adopted in the further tyre building process.

9. Method for manufacturing tyres, wherein the method comprises:
providing an apparatus for manufacturing tyres, having a tyre building drum with a device for realizing a ply turn-up for manufacturing unvulcanized green tyres,
in which a turning-up process of the tyre material can be realized by a plurality of turn-up fingers (2), which are driven by a drive unit mounted outside the tyre building drum, **characterized in that** the external drive of the turn-up fingers (2) is realized by a number of separately driven spindles, which are mounted in a fixed tyre building ring (23) and can be driven synchronously in opposite directions.

10. Method according to Claim 9, **characterized in that** a particularly uniform turn-up is created by synchronous activation of the turning-up mechanism on both sides of the tyre building drum.

11. Method according to Claims 9 or 10, **characterized in that**, by a core setting with a core-to-core spacing greater than or equal to the smallest core spacing adopted in the further course of the production of the green tyre, an advantageous force-angle ratio is obtained, making more effective use of the material pressing force possible.

## Revendications

1. Dispositif de fabrication de pneumatiques, présentant un tambour de confection de pneumatiques doté d'un dispositif permettant de réaliser un retournement de pli pour la fabrication de pneus crus non vulcanisés, dans lequel le retournement de pli peut être réalisé par une pluralité de doigts de retournement (2) qui sont accouplés à une unité d'entraînement qui est disposée à l'extérieur du tambour de confection de pneumatiques,
**caractérisé en ce que** le mécanisme d'entraînement externe des doigts de retournement (2) est réalisé par plusieurs broches entraînées séparément qui sont montées dans un anneau de confection de pneumatiques fixe (23) et peuvent être entraînées de manière synchrone en sens inverse.

2. Dispositif selon la revendication 1, **caractérisé en ce que** les doigts de retournement (2) des moitiés du tambour de confection de pneumatiques sont accouplés à une bague coulissante (16) pour chaque moitié de tambour (3, 4).

3. Dispositif de fabrication de pneumatiques selon au moins l'une des revendications précédentes, **caractérisé en ce que** les doigts de retournement (2) sont accouplés à un servomoteur.

4. Dispositif de fabrication de pneumatiques selon au moins l'une des revendications précédentes, **caractérisé en ce que** les bagues coulissantes (16) présentent respectivement une rainure annulaire (17) qui sert à l'accouplement au mécanisme d'entraînement externe pour les doigts de retournement (2).

5. Dispositif de fabrication de pneumatiques selon la revendication 1, **caractérisé en ce que** l'unité d'entraînement dans l'anneau de confection de pneumatiques fixe (23) peut être accouplée par l'intermédiaire de tenons d'entraînement (26) radialement mobiles à ladite au moins une bague coulissante (16) du tambour de confection de pneumatiques.

6. Dispositif de fabrication de pneumatiques selon la revendication 1, **caractérisé en ce qu'**une machine à carcasse est réalisée de telle sorte que l'utilisation de différents tambours de confection de pneumatiques permet de fabriquer aussi bien des pneumatiques crus à confection plate que des pneumatiques crus à confection en couronne.

7. Dispositif de fabrication de pneumatiques selon la revendication 6, **caractérisé en ce que** la fabrication flexible de pneus crus à confection plate ou en couronne est réalisée par une deuxième unité d'entraînement dans la machine à carcasse.

8. Dispositif de fabrication de pneumatiques selon la revendication 1, **caractérisé en ce qu'**une force de pression de matériau pouvant être utilisée de manière plus efficace est atteinte **en ce que** la distance de pose de noyau pendant le processus de retournement peut être prédéfinie de telle sorte qu'une distance de pose de noyau supérieure ou égale à la plus petite mesure de noyau à noyau qui est approchée dans la suite du processus de confection de pneumatiques est atteinte.

9. Procédé de fabrication de pneumatiques, dans lequel le procédé comprend l'étape consistant à :
prévoir un dispositif de fabrication de pneumatiques, présentant un tambour de confection de pneumatiques doté d'un dispositif permettant de réaliser un retournement de pli pour la fabrication de pneumatiques crus non vulcanisés, dans lequel un processus de retournement du matériau de pneumatique peut être réalisé par une pluralité de doigts de retournement (2) qui est entraînée par un mécanisme d'entraînement monté à l'extérieur du tambour de confection de pneumatiques,
**caractérisé en ce que** le mécanisme d'entraînement externe des doigts de retournement (2) est réalisé par plusieurs broches entraînées séparément qui sont montées dans un anneau de confection de pneumatiques fixe (23) et peuvent être entraînées de manière synchrone en sens inverse.

10. Procédé selon la revendication 9, **caractérisé en ce qu'**un pilotage synchrone du mécanisme de retournement sur les deux côtés du tambour de confection de pneumatiques permet de réaliser un retournement particulièrement homogène.

11. Procédé selon l'une quelconque des revendications 9 ou 10, **caractérisé en ce qu'**une pose de noyau avec une distance de noyau à noyau supérieure ou égale à la plus petite distance de noyau approchée dans la suite de la fabrication de pneumatiques crus permet de créer un rapport force/angle avantageux qui permet une utilisation plus efficace de la force de pression de matériau.
